## Europäisches Patentamt

## European Patent Office

## Office européen des brevets

(19)

(11) Numéro de publication: **0 173 598**
**B1**

(12)

# FASCICULE DE BREVET EUROPEEN

(45) Date de publication du fascicule du brevet:
30.03.88

(51) Int. Cl.⁴: **B 60 H 1/00**

(21) Numéro de dépôt: **85401362.0**

(22) Date de dépôt: **04.07.85**

(54) **Dispositif de liaison pour éléments en forme de boîtier et son application à la réalisation de boîtiers pour climatiseurs de véhicules.**

(30) Priorité: **24.07.84 FR 8411731**

(43) Date de publication de la demande:
**05.03.86 Bulletin 86/10**

(45) Mention de la délivrance du brevet:
**30.03.88 Bulletin 88/13**

(84) Etats contractants désignés:
**BE DE GB IT**

(56) Documents cités:
**DE - A - 2 134 575**
**FR - A - 2 505 268**
**FR - A - 2 507 707**
**GB - A - 1 496 489**
**GB - A - 2 108 190**
**US - A - 2 405 643**

(73) Titulaire: **SOCIETE ANONYME DES USINES CHAUSSON,
35, rue Malakoff, F-92601 Asnieres Cedex
Hauts-de-Seine (FR)**

(72) Inventeur: **Poitier, Gérard, 76 rue Calmel,
F-92230 Gennevilliers (FR)**

(74) Mandataire: **Madeuf, René Louis et al, Cabinet
Madeuf 3, Avenue Bugeaud, F-75116 Paris (FR)**

ACTORUM AG

## Description

La présente invention concerne un dispositif de liaison pour l'assemblage d'éléments de boîtiers, par exemple d'éléments destinés à constituer le boîtier ou carter d'un climatiseur de véhicule.

Les dispositifs mis en oeuvre actuellement comportent, soit des joints souples qui sont pincés entre des parties correspondantes de demi-boîtiers, soit nécessitent des réalisations à ajustement très précis pour obtenir une bonne étanchéité à l'air.

Les boîtiers destinés à l'application mentionnée ci-dessus de même que de nombreux autres boîtiers devant contenir différents objets sont le plus souvent fabriqués en matière synthétique moulée et il est fréquent que les parties correspondantes de demi-boîtiers présentent des différences de cotes importantes.

C'est le cas notamment des parties d'assemblage rectilignes qui tendent souvent à former une courbe dont la flèche est plus ou moins accentuée, de sorte que dans la pratique, on est amené à prévoir des pinces de fixation ou de procéder à des agrafages relativement complexes.

Il a été proposé notamment dans le FR-A-2 505 268 de réaliser un carter dans lequel il est possible sur toute la périphérie de la zone de liaison de réaliser un assemblage par des conformations complémentaires de deux parties tout en prévoyant des moyens de blocage d'un nombre quelconque. Selon la publication ci-dessus, une première partie de carter comporte sur son côté de liaison une rainure dans laquelle s'accroche une languette disposée sur le côté de liaison de la seconde partie de carter, des ergots d'arrêt étant formés directement sur la languette et des étriers de retenue étant constitués par des ouvertures ménagées dans une paroi de délimitation de la rainure.

Bien que le carter du FR-A-2 505 268 soit fabriqué en matière plastique, les jeux existant entre les parties de conformation complémentaire font que des vibrations peuvent prendre naissance et produire des bruits désagréables.

La présente invention remédie aux inconvénients ci-dessus.

Conformément à l'invention, le dispositif de liaison pour éléments de boîtier, notamment de boîtiers pour climatiseurs de véhicule, l'un des éléments présentant une lèvre saillante tandis que l'autre élément présente un rebord d'emboîtement pour la lèvre saillante, des moyens d'appui et de retenue étant disposés alternativement le long de la liaison entre ladite lèvre saillante et ledit rebord déformables élastiquement l'un par rapport à l'autre est caractérisé en ce que la largeur de la rainure séparant le bord tombé de la nervure formée par le rebord d'emboîtement est inférieure à l'épaisseur de la nervure externe de la lèvre saillante.

Diverses autres caractéristiques de l'invention ressortent d'ailleurs de la description détaillée qui suit.

Des formes de réalisation de l'invention sont représentées, à titre d'exemples non limitatifs, aux dessins annexés.

La figure 1 est une perspective d'un boîtier de climatiseur pour véhicule automobile faisant application de l'invention.

La figure 2 est un plan partiel schématique et en partie arrachée, illustrant des caractéristiques particulières de l'invention.

La figure 3 est un plan partiel, à plus grande échelle, d'un détail de la figure 2.

La figure 4 est une coupe vue sensiblement suivant la ligne IV-IV de la figure 2.

La figure 5 est une coupe vue sensiblement sur la ligne V-V de la figure 2.

La figure 6 est une coupe analogue à la figure 5 illustrant un développement de l'invention.

Les figures 7 et 8, 8a sont des coupes analogues à la figure 5 illustrant des caractéristiques supplémentaires de l'invention.

La figure 9 est une coupe partielle analogue à la figure 5 d'une variante.

La figure 10 est une coupe analogue à la figure 5 montrant comment la variante de la figure 9 est mise en oeuvre.

La figure 11 illustre un boîtier constitué par deux éléments 1, 2 qui sont complémentaires et qui sont assemblés par un dispositif de liaison 3.

Dans l'assemblage représenté, le boîtier est destiné à contenir différents appareils, par exemple des échangeurs de chaleur 4, 5 pour chauffer et/ou refroidir de l'air devant être distribué à l'intérieur d'un véhicule à partir d'embouts 6, $6_a$, 7, $7_a$...

Les éléments 1 et 2 sont fabriqués par moulage en matière synthétique, notamment en résine thermoplastique.

L'un des éléments, par exemple l'élément 1, délimite une partie de liaison en forme de lèvres saillantes 8, et l'autre élément un rebord d'emboîtement 9, la lèvre 8 et le rebord 9 sont, le plus souvent, horizontaux, mais peuvent être également verticaux.

La lèvre saillante 8 présente, à son extrémité deux nervures 10 et 11 séparées par une rainure 12.

La face externe 13 de la nervure 11 délimite une rampe inclinée depuis l'extrémité vers la base.

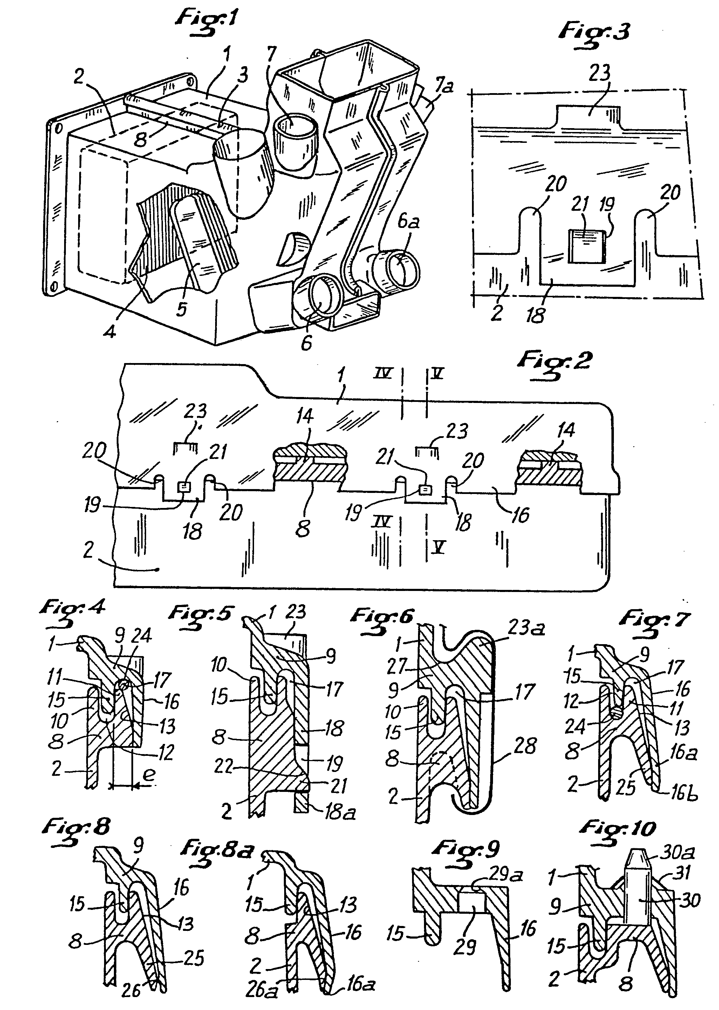

De préférence, la hauteur des nervures 10 et 11 est la même et l'une de ces nervures, de préférence la nervure 10, comporte de place en place un doigt saillant 14 (figure 2).

Le rebord d'emboîtement 9 délimite une nervure médiane 15 dont l'épaisseur est plus faible que la largeur de la rainure 12.

Par ailleurs, le rebord d'emboîtement 9 délimite un bord tombé 16 séparé de la nervure médiane 15 par une rainure 17. La largeur de la rainure 17 est plus petite que l'épaisseur e qui sépare la face externe de la rainure 12 de la partie la plus saillante de la face externe 13 délimitant la nervure 11.

De cette façon, et comme l'illustrent bien les figures, lorsque l'élément 1 est assemblé contre l'élément 2, la nervure 15 prend appui contre la face externe délimitant la rainure 12 tandis que la face interne du bord tombé 16 prend appui contre la face externe 13 en forme de rampe.

La matière plastique constitutive des éléments 1 et 2 étant souple et élastique et la face externe 13 formant une rampe, il s'ensuit que la nervure 11 est serrée entre la nervure 15 et le bord tombé 16 ce qui a pour effet de supprimer les jeux pouvant résulter des tolérances de fabrication alors que les nervures 10, 11 et 15 ne touchent pas le fond des rainures correspondantes.

Les figures 2 et 3 montrent que l'élément 1 délimite de place en place des languettes 18, présentant une lumière 19. Afin d'augmenter la flexibilité des languettes 18, il est avantageux de prévoir des encoches 20 de part et d'autre de chacune d'elles.

Le nombre de languettes 18 correspond au nombre de doigts saillants 14 et ces derniers sont disposés approximativement à mi-distance entre deux languettes 18.

La lèvre saillante 8 forme des protubérances 21 en coïncidence avec les lumières 19 des languettes 18.

Il est avantageux ainsi que l'illustre la figure 5 que les protubérances 21 présentent une surface externe 22 en forme de rampe, ce qui facilite la déformation des languettes 18 lors de l'emboîtement de l'élément 1 sur l'élément 2.

Au moins un doigt saillant 14 étant prévu entre deux protubérances 21 et la disposition respective des doigts saillants 14 et des protubérances 21 faisant qu'il est nécessaire d'exercer une force relativement importante sur le rebord d'emboîtement 9 afin de permettre l'engagement des protubérances 21 dans les lumières 19.

Il est avantageux de munir l'élément 1 d'enclumes 23 (figures 2, 3 et 5) qui permettent d'appliquer une poussée facilitant la mise en place des protubérances 21 dans les lumières 19 par déformation élastique du rebord d'emboîtement 9.

Ce qui précède et le dessin montrent que les éléments 1 et 2 prennent appui l'un contre l'autre par des parties de faible surface assimilables à des éléments ponctuels et qui sont disposés en alternance.

Le fait qu'une déformation élastique des parties d'emboîtement est produite a pour effet de supprimer les jeux de construction et d'empêcher, par conséquent, tout mouvement vibratoire entre les éléments 1 et 2, ce qui complète l'amortissement déjà obtenu par la pression exercée sur la nervure 11 par la nervure 15 et le bord tombé 16.

Le bord tombé 16 s'étend sur toute la longueur du joint existant entre les éléments 1 et 2, et par conséquent, l'application élastique de ce bord tombé 16 sur la rampe que forme la face externe de la nervure 11 assure une liaison réalisant une étanchéité satisfaisante à l'air.

Si on le désire, la liaison décrite peut également être rendue étanche à l'eau en disposant un joint 24 dans le fond de la rainure 12 (figure 7) ou de la rainure 17 (figure 4).

Pour améliorer l'étanchéité à l'air en même temps que l'élasticité de la liaison, la nervure 11 peut être prolongée par un bord saillant 25, de manière analogue le bord tombé est alors prolongé en 16a, pour s'étendre sensiblement jusqu'à la partie inférieure 18a des languettes 18. De cette sorte la liaison vue de l'extérieur forme une ligne continue délimitée par l'extrémité 16b du bord tombé 16.

La figure 8 montre que le bord 25 peut être muni extérieurement d'un bourrelet 26 assurant un appui linéaire au bord tombé 16. Cette disposition améliore l'étanchéité de la liaison. La figure 8a fait apparaître que l'extrémité 16a du bord tombé 16 peut prendre appui sur une portée étroite 26a et que la nervure 10 peut être supprimée.

La description qui précède montre que les liaisons décrites permettent de démonter des éléments 1 et 2.

En effet, il suffit, lorsqu'on considère la figure 5, d'écarter la partie inférieure 18a des languettes 18 pour que celles-ci échappent aux protubérances 21.

Dans certains cas, il peut arriver qu'une languette soit cassée. Pour remédier à cet inconvénient, il est possible comme le montre la figure 6 de prévoir que les enclumes 23a présentent une forme arrondie et ne soient séparées de la paroi de l'élément que par une rainure 27.

Les enclumes 23 permettent ainsi la mise en place éventuelle des pinces 28, par exemple métalliques.

Les figures 9 et 10 illustrent une variante selon laquelle le rebord d'emboîtement 9 présente de place en place des trous 29 délimitant une partie rétrécie 29a.

Par ailleurs, la lèvre saillante 8 comporte des broches 30 à extrémité conique 30a. Le diamètre des broches 30 est choisi égal à celui des trous 29, ce qui a pour effet de déformer la partie rétrécie 29a lors de l'engagement des broches 30. Cette disposition assure une bonne étanchéité de la liaison. Il est possible supplémentairement, pour améliorer la fixation, de mettre en place des rondelles coniques 31 enfilées sur l'extrémité saillante des broches 30.

L'invention n'est pas limitée aux exemples de réalisation représentés et décrits en détail, car diverses modifications peuvent y être apportées sans sortir du cadre, défini par la portée des revendications annexées.

**Revendications**

1. Dispositif de liaison pour éléments de boîtier, notamment de boîtiers pour climatiseurs de véhicule, l'un (2) des éléments présentant une lèvre saillante (8) tandis que l'autre élément (1) présente un rebord d'emboîtement (9) pour la lèvre saillante (8), des moyens d'appui (14) et de retenue (19, 21) étant disposés alternativement le long de la liaison entre ladite lèvre saillante (8) et ledit rebord (9) déformables élastiquement l'un par rapport à l'autre, caractérisé en ce que la largeur de la rainure (17) séparant le bord tombé (16) de la nervure (15) formée par le rebord d'emboîtement (9) est inférieure à l'épaisseur (e) de la nervure externe (11) de la lèvre saillante (8).

2. Dispositif suivant la revendication 1, caractérisé en ce que la lèvre saillante (8) et le rebord d'emboîtement (9) forment des nervures (10, 11; 15) et des rainures (12, 17) mutuellement emboîtées.

3. Dispositif suivant l'une des revendications 1 ou 2, caractérisé en ce que le rebord d'emboîtement (9) forme un bord tombé (16) déformé élastiquement par la face externe (13) en forme de rampe de la lèvre saillante (8).

4. Dispositif suivant l'une des revendications 1 à 3, caractérisé en ce que le bord tombé (16) s'étend sur toute la longueur de la liaison.

5. Dispositif suivant l'une des revendications 1 à 4, caractérisé en ce que l'une des nervures (10 ou 11) de la lèvre saillante (8) comporte sur son dessus des doigts saillants (14) formant lesdits moyens d'appui et disposés sensiblement à mi-distance de protubérances (21) formées à l'extérieur de la lèvre saillante (8) et introduites à force dans les lumières (19) de languettes (18) délimitées par le rebord d'emboîtement (9), ces derniers éléments constituant lesdits moyens de retenue.

6. Dispositif suivant l'une des revendications 1 à 5, caractérisé par des enclumes (23, 23a) formées au-dessus du rebord d'emboîtement, en alignement avec les lumières (19).

7. Dispositif suivant l'une des revendications 1 à 6, caractérisé en ce que les enclumes (23a) font saillie au-delà d'une rainure (27) et retiennent une pince (28) de liaison du rebord d'emboîtement (9) et de la lèvre saillante (8).

8. Dispositif suivant l'une des revendications 1 à 7, caractérisé en ce que le rebord d'emboîtement présente des trous (29) délimitant des parties rétrécies (29a) tandis que la lèvre saillante (8) comporte des broches (30) disposées en correspondance avec lesdits trous (29).

9. Dispositif suivant l'une des revendications 1 à 8, caractérisé par des rondelles de retenue (31) enfilées sur les broches (30).

10. Dispositif suivant l'une des revendications 1 à 9, caractérisé en ce que la face externe (13) de la nervure externe (11) de la lèvre saillante (8) est prolongée par un bord incliné (25).

11. Dispositif suivant l'une des revendications 1 à 10, caractérisé par un bourrelet (26) faisant saillie du bord externe (13) sur toute la longueur de celui-ci.

**Patentansprüche**

1. Verbindungseinrichtung für Elemente in der Form eines Gehäuses und seine Anwendung zum Realisieren von Gehäusen für Fahrzeugklimageräte, wobei eines der Elemente (2) eine vorspringende Lippe (8) aufweist, während das andere Element (1) einen Aufnahmerand (9) für die vorspringende Lippe (8) hat, wobei Stützeinrichtungen (14) und Festhalteeinrichtungen (19, 21) abwechselnd zwischen der vorspringenden Lippe (8) und dem Aufnahmerand (9) entlang der Verbindung angeordnet sind, die elastisch in bezug aufeinander verformbar sind, dadurch gekennzeichnet, dass die Breite die den abfallenden Rand (16) von der durch den Aufnahmerand (9) gebildeten Rippe (15) trennt, geringer als die Stärke (e) der äusseren Rippe (11) der vorspringenden Lippe (8) ist.

2. Verbindungsvorrichtung nach Anspruch 1, dadurch gekennzeichnet, dass die vorspringende Lippe (8) und der Aufnahmerand (9) Rippen (10, 11; 15) und Nuten (12, 17) bilden, die jeweils ineinandergreifen.

3. Verbindungsvorrichtung nach einem der Ansprüche 1 oder 2, dadurch gekennzeichnet, dass der Aufnahmerand (9) einen abfallenden Rand (16) bildet, der durch die in Form einer Rampe ausgebildete Aussenseite (13) der vorspringenden Lippe elastisch verformt wird.

4. Verbindungsvorrichtung nach einem der Ansprüche 1 bis 3, dadurch gekennzeichnet, dass sich der abfallende Rand (16) über die gesamte Verbindungslänge erstreckt.

5. Verbindungsvorrichtung nach einem der Ansprüche 1 bis 4, dadurch gekennzeichnet, dass eine der Rippen (10 oder 11) der vorspringenden Lippe (8) an ihrer Oberkante vorstehende Finger (14) aufweist, die im wesentlichen in der Mitte zwischen Vorsprüngen (21) liegen, die an der Aussenseite der vorspringenden Lippe (8) vorhanden sind und unter Druckanwendung in die Öffnungen (19) von Zungen (18) eingeführt werden, die durch den Aufnahmerand begrenzt sind, wobei diese letzten Elemente die obengenannten Festhalteeinrichtungen bilden.

6. Verbindungsvorrichtung nach einem der Ansprüche 1 bis 5, gekennzeichnet durch Ambosse (23, 23a), die oberhalb des Aufnahmerandes fluchtend zu den Öffnungen (19) liegen.

7. Verbindungsvorrichtung nach einem der Ansprüche 1 bis 6, dadurch gekennzeichnet, dass die Ambosse (23a) über eine Nut (27) hinaus vorstehen und eine Verbindungsklammer (28) für den Aufnahmerand (9) und die vorspringende Lippe (8) aufnehmen.

8. Verbindungsvorrichtung nach einem der Ansprüche 1 bis 7, dadurch gekennzeichnet, dass der Aufnahmerand Löcher (29) aufweist, die verengte Abschnitte (29a) begrenzen, während die vorspringende Lippe (8) Stifte (30) trägt, die entsprechend den Löchern (29) angeordnet sind.

9. Verbindungsvorrichtung nach einem der Ansprüche 1 bis 8, gekennzeichnet durch Haltescheiben (31), die auf die Stifte (30) eingefädelt sind.

10. Verbindungsvorrichtung nach einem der Ansprüche 1 bis 9, dadurch gekennzeichnet, dass die Aussenseite (13) der Aussenrippe (11) der vorspringenden Lippe (8) durch einen geneigten Rand (25) verlängert ist.

11. Verbindungsvorrichtung nach einem der Ansprüche 1 bis 10, gekennzeichnet durch einen Wulst (26), der vom Aussenrand (13) über die gesamte Länge desselben vorsteht.

**Claims**

1. Connecting device for box like elements, particularly boxes for vehicle conditioners, one (2) of the elements having a projecting lip (8) thereon while the other element (1) has a receiving flange (9) for the projecting lip (8), bearing (14) and retaining (19, 21) means being placed alternately along the connection between said projecting lip (8) and said flange (9), resiliently deformable one with respect to the other, characterized in that the width of the groove (17) separating the depending edge (16) from the rib (15) formed by the receiving edge (9) is smaller than the thickness (e) of the external rib (11) of the projecting lip (8).

2. Device according to claim 1, characterized in that the projecting lip (8) and the receiving flange (9) form mutually nested ribs (10, 11; 15) and grooves (12, 17).

3. Device according to one of claims 1 or 2, characterized in that the receiving flange (9) forms a depending edge (16) resiliently deformed by the external ramp-shaped side (13) of the projecting lip (8).

4. Device according to one of claims 1 to 3, characterized in that the depending edge (16) extends in the whole length of the connection.

5. Device according to one of claims 1 to 4, characterized in that one of the ribs (10 or 11) of the projecting lip (8) comprises projecting fingers (14) on its top, forming said bearing means and located substantially midway of protrusions (21) formed at the outside of the projecting lip (8) and forcingly engage into the openings (19) of lugs (18) defined by the receiving flange (9), these latter elements constituting said retaining means.

6. Device according to one of claims 1 to 5, characterized by anvils (23, 23a) formed on top of the receiving flange, in aligment with the openings (19).

7. Device according to one of claims 1 to 6, characterized in that the anvils (23a) are projecting beyond a groove (27) and hold a clamp (28) connecting the receiving flange (9) and the projecting lip (8).

8. Device according to one of claims 1 to 7, characterized in that the receiving flange is provided with holes (29) delimiting narrowed portions (29a), while the protruding lip (8) comprises pins (30) located in correspondence with said holes (29).

9. Device according to one of claims 1 to 8, characterized by retaining washers (31) inserted onto the pins (30).

10. Device according to one of claims 1 to 9, characterized in that the external side (13) of the external rib (11) of the projecting lip (8) is extended by a sloping edge (25).

11. Device according to one of claims 1 to 10, characterized by a rim (26) projecting from the external edge (13) on the whole length thereof.

Fig.1
Fig.3
Fig.2
Fig.4
Fig.5
Fig.6
Fig.7
Fig.8
Fig.8a
Fig.9
Fig.10